# EUROPEAN PATENT SPECIFICATION

(11) **EP 1 676 685 B1**
(45) Date of publication and mention of the grant of the patent: **20.08.2008**
(21) Application number: 05027697.1
(22) Date of filing: 17.12.2005
(51) Int. Cl.: B29B 7/42, B29B 7/74, B01F 3/04, B29C 44/34, B01F 7/00, B29C 45/17

(54) **Apparatus and method for controlling microscopic bubble nucleation in fluid polymer material production**
Vorrichtung und Verfahren zum Kontrollieren der Nukleierung von microskopischen Blasen in der Herstellung von flüssigen polymeren Materialien
Appareil et méthode de controle de la nucléation des bulles microscopiques dans la production d'un materiau polymérique

(30) Priority: 28.12.2004 JP 2004380647
(43) Date of publication of application: 05.07.2006
(73) Proprietor: Everfocus Worldwide Co., Ltd., Road Town Tortola (VG)
(72) Inventor: Chang, Chien-Tsung, Changua City (CN)
(74) Representative: Panten, Kirsten

(56) References cited:
- EP-A- 1 072 375
- WO-A-20/04037510
- US-A- 3 972 970
- US-A- 4 033 710
- US-A1- 2004 145 074
- PATENT ABSTRACTS OF JAPAN vol. 1998, no. 12, 31 October 1998 (1998-10-31) -& JP 10 180788 A (IDEMITSU PETROCHEM CO LTD), 7 July 1998 (1998-07-07)

## Description

The invention relates to a method for controlling microscopic bubble nucleation in fluid polymer material production and its apparatus.

The polymer material utilized by conventional injection or extraction forming mechanisms is melted into a liquid, following which a physical foaming agent is added to the polymer material and after blending, the said polymer contains a foaming agent and unit cell amalgamation, the amalgamation is then injected into a forming die to harden, the pressure reduction enabling polymer unit cell growth in the amalgamation. However, the polymer material gives rise to a chemical reaction that produces a gaseous foaming agent, typically utilizing organic compounds, that under critical temperature characteristically decomposes and releases nitrogen, carbon dioxide, carbon monoxide, and other gases as bubble nucleation occurs in the liquid polymer. As such, approaches reflecting the said technology to promote nucleation in the liquid polymer such as Taiwanese patent publication No. 424039 or Patent No. 1128443 (Microscopic Cell Perforation Material Injection Molding) utilize an injection molding or extraction mechanism with polymer as a raw material in which a liquid foaming agent is added into the said liquid polymer via the conveyance screw shaft, the said foaming agent then amalgamated at the conveyance screw shaft section, where the liquid polymer is blended and amalgamated, and admitted into the passage of a nucleation device from an accumulation chamber for pressure reduction such that the liquid polymer is rapidly nucleated; the said foaming agent utilizes solid or liquid carbon dioxide and the foaming agent enters the conveyance screw shaft section, the screw shaft blending the foaming agent with the liquid polymer material into an amalgamation that passes through an injection nozzle that enables the transfer of the said polymer material into the forming die for nucleation.

From EP-A-1072 375 an apparatus is known comprising a materials pipe of a plasticizing unit having a conveyance screw shaft inside said materials pipe to provide for polymer material melting and conveyance screw shaft transferring, wherein a gas pipe is disposed in the interior section of the conveyance screw shaft and the gas pipe is connected to a high pressure gas storage tank. Further, a microbubble generating component consisting of a porous portion of the wall of conveyance screw shaft is disposed around the outward end of the gas pipe.

Furthermore, there is known from said reference a respective method for the preparation of foamed polymers.

From US 2004/145074 and WO 2004/037510 an apparatus and a process for injection-molding of foamed parts are known using a physical blowing agent which is introduced from a pipe in the interior of the screw plunger into the polymer melt via a permeable section in the screw plunger or via permeable mixing elements distributed over the screw plunger, respectively.

From Patents Abstracts of Japan, Volume 1998, No. 12 referring to JP 10180788 A a gas injection-molding apparatus and the respective process are known wherein a screw is rotated in which a gas injecting device is installed to melt and plasticize a specified amount of resin and accumulate it in the cylinder mounted forward of the screw. Further, a specified amount of nitrogen gas is injected into the molten resin in the cylinder mounted forward to the screw from a gas injection aperture through a gas passageway connected to an inert gas cylinder. A hollow molding process is performed with a low-pressure gas by injecting the molten resin containing a gas into a mold cavity after or halfway through injecting the molten resin containing no gas into the mold cavity.

### I. Problems Requiring Solution

1. The polymer material nucleation obtained by the prior art polymer material nucleation method is incapable of a microscopic cell perforation dimensions of less than 35 microns using only a gaseous, liquid, or solid foaming agent because the bubbles produced are not uniform; a micron foaming material is required for such uniformity. However, the said micron foaming material is expensive high in cost, and offers little economic advantage.
2. The deposition opening of the said foaming agent is situated at the outer edge of the materials pipe (11) and is in continuity with the blending section of the conveyance screw shaft and, furthermore, adding in occurs at a set point, the foaming agent and liquid polymer material then blended and amalgamated by the conveyance screw shaft at the materials pipe (11) section; however, before the liquid polymer material is blended, the foaming agent is introduced onto the surface of the melted polymer material and then blended, easily causing bubble run off and unevenness; furthermore, foaming agent and polymer material blending involves a lengthy foaming period and a slow rate that correspondingly increases cost.
3. Heating in the materials pipe to melt the liquid polymer material, it is difficult to control the separation of the non-nucleated portion and nucleated portion at injection into the forming die and, furthermore, control over the required foaming agent percentage with the non-nucleated section is very problematic.
4. A check valve must be installed at the said foaming agent deposition opening to prevent polymer material counter flow, but the device increases equipment costs and malfunction rates.

### II. Solution Methods

The solution to the problems mentioned before is disclosed by the features of the apparatus claim 1 and of the method claim 8.
1. The invention herein utilizes a microbubble generating component (such as a microscopic perforation vented metal head or a microscopic perforation ceramic head, etc.) installed on a conveyance screw shaft and, furthermore, the said gas pipe is disposed in the interior section of the conveyance screw shaft and connected to the said microbubble generating component (such as a microscopic perforation vented metal head or a microscopic perforation ceramic head, etc.), enabling the delivery of gas through the gas pipe via a pressurization pump or a high pressure gas storage tank, with a heater at the outer edge of a materials pipe melting a polymer material, while indirectly pre-heating the gas pipe, such that microscopic bubbles are then outputted from the inside of irregularly arranged microscopic perforations of the microbubble generating component (such as a microscopic perforation vented metal head or a microscopic perforation ceramic head, etc.) which are widely distributed directly into the interior portion of the liquid polymer material, simultaneously blended and transferred by the conveyance screw shaft, and next injected into a forming die for lowering to critical temperature and pressure reduction as the polymer material is microbubble nucleated, thereby providing for simultaneous microbubble generation, blending, and transference to achieve the even distribution of microbubbles in the polymer material and, furthermore, the said microbubble nucleation dimensions are based on that of the microscopic perforations of the microbubble generating component 18 (such as a microscopic perforation vented metal head or a microscopic perforation ceramic head, etc.) to achieve the required size of less than 35 microns.
2. The invention herein utilizes a microbubble generating component (such as a microscopic perforation vented metal head or a microscopic perforation ceramic head, etc.) installed at the front extremity of the conveyance screw shaft such that the said microscopic bubble supply section can be controlled to supply intermittently, enabling a clear demarcation of nucleated and non-nucleated polymer material injected into the forming die and, furthermore, the present invention is easy to control and further provides for adhesion of the non-nucleated polymer to the forming die surface, the said non-nucleated polymer material surrounding the microbubble nucleated polymer material at the interior section to thereby achieve a nonporous glossy surface encapsulating a microbubble nucleated interior section.
3. Since the microscopic perforations of the microbubble generating component in the invention herein are irregularly arranged outwardly from the inside, the polymer material does not have to flow into the microscopic perforations and, furthermore, clogging is precluded because the said conveyance screw shaft is at high temperature and melts the polymer material into liquid, with the microscopic bubbles forced out at high pressure such that a check valve is not required, reducing equipment cost and lowering malfunction rates.

The differentiated blending method of the microbubble nucleation in liquid polymer of the present invention is illustrated below and followed by the detailed description of the invention herein.
Figure 1 is a cross-sectional drawing of the first embodiment microscopic bubble generating component and the production method of the invention herein.
Figure 1-A is a magnified drawing of the microscopic perforations in the surface of the first embodiment microbubble generating component of the invention herein.
Figure 1-B is a cross-sectional drawing of the second embodiment microbubble generating component of the invention herein.
Figure 1-C is a cross-sectional drawing of the third embodiment microbubble generating component of the invention herein.
Figure 2 is a cross-sectional drawing of the separately transferred microbubble permeated and non-microbubble permeated polymer material.
Figure 3 is a cross-sectional drawing of the polymer material in FIG. 2 injected into the forming die as nucleated and non-nucleated.
Figure 4 is a cross-sectional drawing of the extractor utilized for the nucleated polymer material forming method of the invention herein.
Figure 5-A is an isometric drawing of the extractor flow diverter ring of the invention herein.
Figure 5-B is an orthographic drawing of the flow diverter ring of the invention herein, as viewed from the front.
Figure 5-C is a cross-sectional drawing of the flow diverter ring and the microscopic bubble produced component.
Figure 6 is a cross-sectional drawing of the flow diverter ring sleeved on the microbubble generating component along with the bubble nucleated and non-bubble nucleated polymer material separation structure and method.

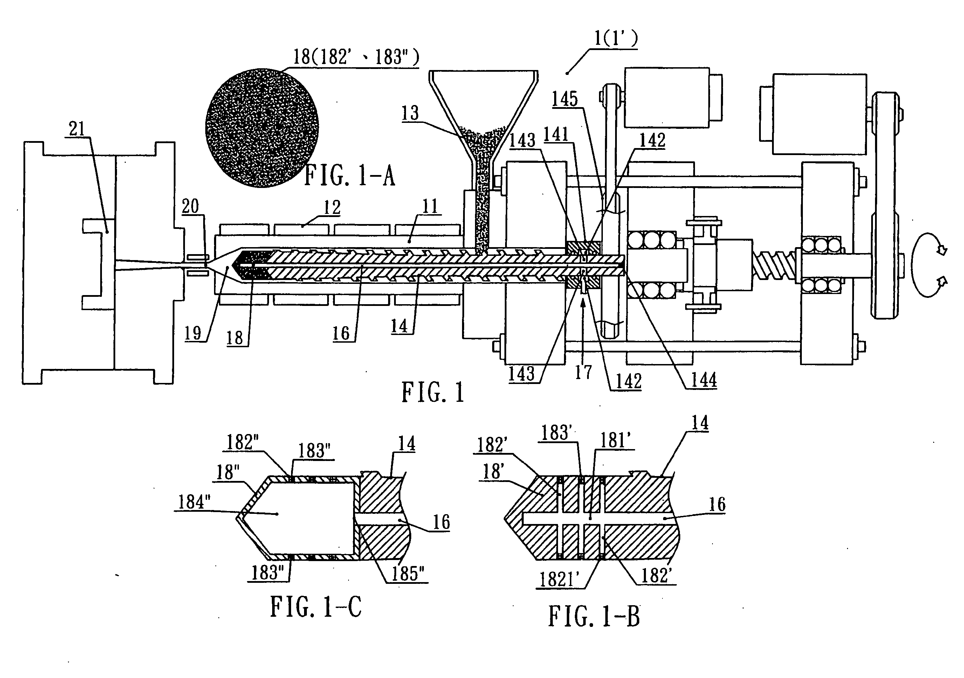

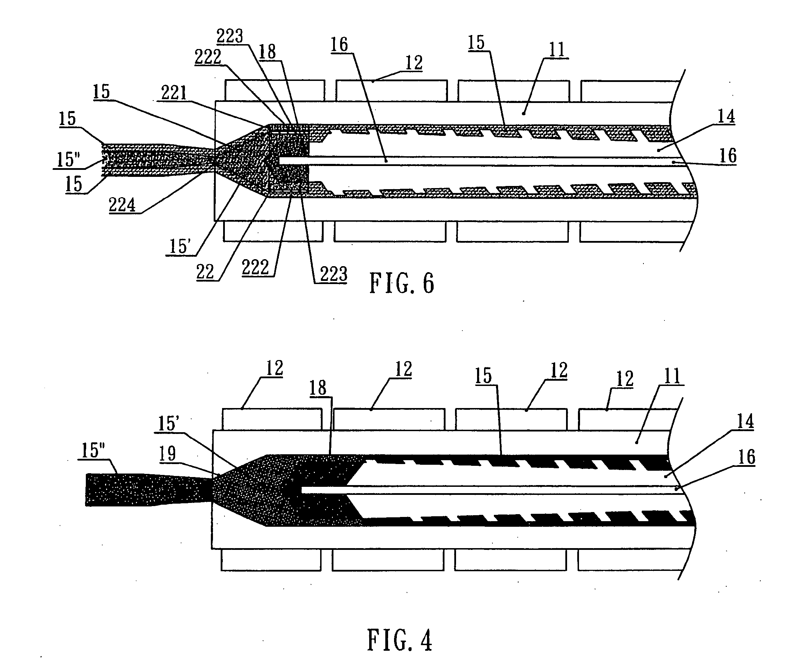

The first embodiment of the invention herein, referring to FIG. 1 and FIG. 1-A, utilizes a materials pipe 11 inside an injector or an extractor 1 (1') having a heater 12 outside to melt polymer material 13 which is transferred and blended along a conveyance screw shaft 14, the molten liquid polymer material 15 thereby pushed forward; the said foaming source utilized involves the gaseous precipitation of a foaming reaction in the polymer material; a gas pipe 16 is disposed in the conveyance screw shaft 14, an air intake opening 17 is situated at the rear extremity and connected to a pressurization pump or a high pressure gas storage tank and, furthermore, a microbubble generating component 18 (such as a microscopic perforation vented metal head or a microscopic perforation ceramic head, etc.) is installed at the front extremity of the conveyance screw shaft 14; the said microbubble generating component 18 (such as a microscopic perforation vented metal head or a microscopic perforation ceramic head, etc.) has densely and irregularly arranged interconnected microscopic perforations disposed outward from the inside and, furthermore, the dimensions of the said microscopic perforations are brought to the required generated microbubble nucleating dimensions by replacing the microbubble generating component 18 (such as a microscopic perforation vented metal head or a microscopic perforation ceramic head, etc.) and attaching it to the said gas pipe 16 such that the gas pipe 16 and the microbubble generating component 18 (such as a microscopic perforation vented metal head or a microscopic perforation ceramic head, etc.) are connected together; as a result, referring to FIG. 4, high pressure gas from the pressurization pump or the high pressure gas storage tank travels through the air intake opening 17 into the gas pipe 16, the heater 12 around the materials pipe 11 melts the polymer material 13, while indirectly heating the conveyance screw shaft 14, exposing the interior of gas pipe 16 to heat, which is conducted into the microbubble generating component 18 (such as a microscopic perforation vented metal head or a microscopic perforation ceramic head, etc.), causing the output of the said hot gas to the exterior through the microscopic perforations from the inside, the said microscopic bubbles then directly admitted into the said section of liquid polymer material 15, the conveyance screw shaft 14 blends and mixes, while evenly amalgamating into a microbubble permeated polymer material 15' and transferring it into the material holding section 19 at the front extremity, thereby simultaneously achieving microscopic bubble generation, blending, and transferring such that the evenly amalgamated microbubble permeated polymer material 15' goes through an injection orifice 20 into the forming die 21 for depressurization and, furthermore, causing temperature to reach critical temperature such that when the polymer material hardens into shape, a microbubble nucleated polymer material 15" is produced, thereby providing for a nucleating method for evenly distributed microbubble nucleation throughout polymer material.

The said microbubble generating component 18 consists of densely and irregularly arranged microscopic perforations disposed outward from the inside; counter flow does not occur at the microscopic perforations along the surface and a check valve is not required, lessening malfunction rates and reducing production cost.

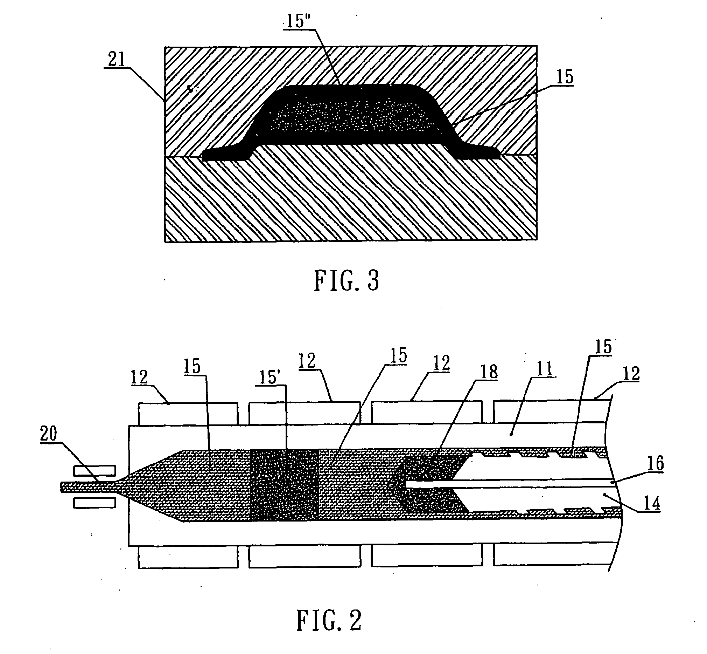

Referring to FIG. 2 and FIG. 3, the means of the said microbubble nucleation section control, gas conveyance or the termination thereof causes the microbubble generating component 18 (such as a microscopic perforation vented metal head or a microscopic perforation ceramic head, etc.) microscopic perforations to stop outputting microscopic bubbles, affording the option of either the intermittent supplying of gas or halting the supply such that the liquid polymer material 15 in the material holding section 19 provides microbubble permeated liquid polymer material 15' or non-microbubble permeated liquid polymer material 15 such that admission into the forming mold 21 is according to the said selectable continuous supply or intermittent supply of microbubbles, and the interior section has microbubble nucleated polymer material 15" or the entire body is a microbubble nucleated polymer material 15"; of course, the said microbubble generating component 18 can be connected to a suitable position of the conveyance screw shaft 14 for supporting the injection of the liquid polymer material 15 into the forming die 21 at a certain shaping volume.

In the preceding elaboration, as shown in FIG. 3, the non-microbubble permeated polymer material 15 is first injected into the forming die 21 and; according to the molding characteristics of the polymer material, the non-microbubble permeated polymer material 15 first adheres to the surface of the forming die 21 to form a glossy finish, following which the accompanying microbubble permeated polymer material 15' is injected into the forming mold 21 such that the non-microbubble permeated polymer material 15 surrounds the microbubble nucleated polymer material 15".

The second embodiment of the invention herein, referring to FIG. 1-B, consists of fabricating the microbubble generating component 18 into a solid metal component 18' mounted on the conveyance screw shaft 14; a gas passage 181' is horizontally disposed through the center that is in continuity with the gas pipe 16 inside the conveyance screw shaft 14 and, furthermore, a plurality of vent holes 182' are formed through the periphery of the solid metal component 18', the said vent holes 182' are in continuity with the gas passage 181' and a microscopic perforation vent block 183' is situated in each vent hole 182'; the said microscopic perforation vent block 183' and the first embodiment microbubble generating component 18 are of an identical material composition, enabling microscopic bubbles from the gas pipe 16 entering the gas passage 181' to respectively pass through the vent holes 182' such that microscopic bubbles are output from the microscopic perforations of the microscopic perforation vent block 183', thereby providing for the same performance as that of the said first embodiment.

The third embodiment of the invention herein, referring to FIG. 1-C, consists of fabricating the microbubble generating component 18 as a hollow metal component 18" such that an air chamber 184" is formed in the interior section and, furthermore, a through-hole 185" is disposed in the rear extent of the said hollow metal component 18" which is in continuity with the gas pipe 16 inside the said conveyance screw shaft 14 and, furthermore, a plurality of vent holes 182" are formed through the periphery of the hollow metal component 18", with a microscopic perforation vent block 183" is situated in each vent hole 182"; the said microscopic perforation vent block 183' and the first embodiment microbubble generating component 18 are of an identical material composition, enabling the entry of microscopic bubbles from the gas pipe 16 into the air chamber 184" such that microscopic bubbles are output from the microscopic perforations of the microscopic perforation vent block 183", thereby providing for same performance as that of the said first embodiment.

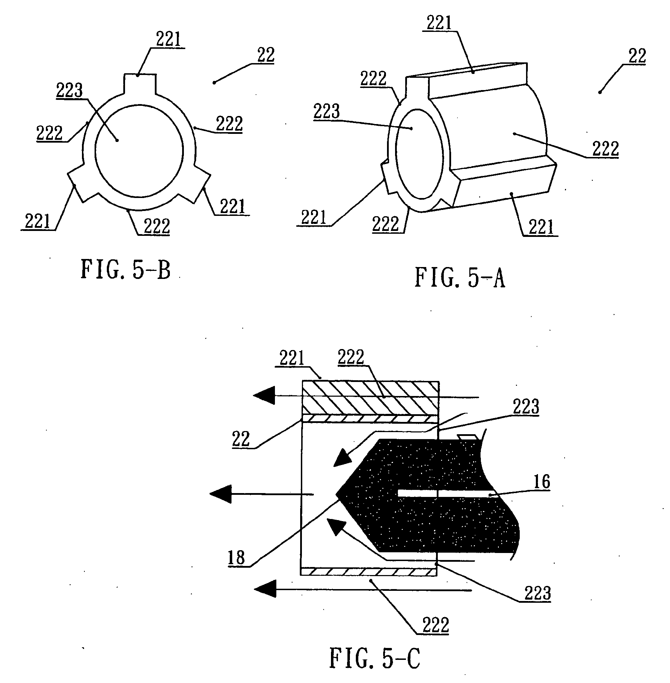

The fourth embodiment of the invention herein, referring to FIG. 5-A, FIG. 5-B, and FIG. 5-C, consists of an apparatus in which when the extractor is utilized to draw out the polymer material, the non-nucleated is maintained at the outer portion of the said extracted polymer material so that the surface is glossy and the nucleated is generated at the inner portion; a flow diverter ring 22 is sleeved onto the front end of the microbubble generating component 18 and ribs 221 are formed lengthwise along the outer edges of the said flow diverter ring 22 such that the height between the outer edges of the flow diverter ring 22 and the materials pipe 11 defined by the lengthwise ribs 221 forms a non-microbubble permeated polymer material channel 222, while that between the inner edge of the flow diverter ring 22 and the microbubble generating component 18 forms a microbubble permeated polymer material channel 223; as a result, referring to FIG. 5-C and FIG. 6, the said liquid polymer material 15 is pushed forward, a portion passing through the said non-microbubble permeated polymer material channel 222 and a portion admitted into the microbubble permeated polymer material channel 223 such that the non-microbubble permeated liquid polymer material 15 surrounds the microbubble permeated liquid polymer material 15' while being drawn out of the extraction orifice 224, the outer portion shaped as non-microbubble permeated liquid polymer material 15 and the inner portion shaped as microbubble nucleated polymer material 15", thereby providing for the encapsulation of the microbubble nucleated polymer material 15" by the non-microbubble permeated liquid polymer material 15.

In summation of the foregoing section, the invention herein provides for the formation of microscopic bubbles via gaseous mediums in liquid polymer material such that the polymer material becomes microbubble nucleated and, furthermore, directly amalgamating the microbubbles into the polymer material such that balanced microbubble nucleation occurs in the amalgamated polymer during constitution; the microscopic perforation dimensions of the microbubble generating component 18 (such as a microscopic perforation vented metal head or a microscopic perforation ceramic head, etc.) is selectable to provide for microbubble nucleation size, while the microscopic bubble output control provides for different sections of varying amalgamation to accommodate differing polymer material production requirements, with rapid and even nucleation to increase quality and, furthermore, the apparatus is simple in structure to reduce production costs.

## Claims

1. Apparatus for performing a method of controlling microscopic bubble nucleation in fluid polymer material production comprising.a materials pipe (11) of an injector or an extractor (1 (1')) having a heater (12) outside, with a conveyance screw shaft (14) inside the said materials pipe (11) to provide for polymer material melting and conveyance screw shaft (14) transferring, the features of which are:
a gas pipe (16) disposed in the interior section of the said conveyance screw shaft (14) and air intake opening (17) of the gas pipe (16) connected to a pressurization pump or a high pressure gas storage tank; and
a microbubble generating component (18) that consists of irregularly interconnected microscopic perforations disposed outward from the inside, with the said gas pipe (16) extending into the interior section of the said microbubble generating component (18),
**characterized in that** the microbubble generating component (18) is provided at the front extremity of the conveyance screw shaft (14).

2. Apparatus according to claim 1,
**characterized in that**
the said microbubble generating component (18) is a microscopic perforation vented metal head.

3. Apparatus according to claim 1,
**characterized in that**
the said microbubble generating component (18) is a microscopic perforation vented ceramic head.

4. Apparatus according to one of the preceding claims,
**characterized in that**
the said microbubble generating component (18) is fabricated as a solid metal component; a gas passage is horizontally disposed through the center that is in continuity with the said gas pipe (16) inside the said conveyance screw shaft (14) and a plurality of vent holes (182') are formed through the periphery of the said solid metal component, the said vent holes (182') are in continuity with the said gas passage and a microscopic perforation vent block (183') is situated in each said vent hole (182'), and the said microscopic perforation vent block (183') also has irregular microscopic perforations.

5. Apparatus according to one of the preceding claims,
**characterized in that**
the said microbubble generating component (18) is fabricated as a hollow metal component such that an air chamber is formed in the interior section and, furthermore, a through-hole is disposed in the rear extent of the said hollow metal component which is in continuity with the said gas pipe (16) inside the said conveyance screw shaft (14) and a plurality of vent holes (182') are formed through the periphery of the said hollow metal component, a microscopic perforation vent block (183') is situated in each said vent hole (182'), and the said microscopic perforation vent block (183') also has irregular microscopic perforations.

6. Apparatus according to one of the preceding claims,
**characterized in that**
the said microbubble generating component (18) is provided on an extractor and has a flow diverter ring (22) sleeved onto its outer edge and ribs (221) are formed lengthwise along the periphery of the said flow diverter ring (22) such that the height between the outer edges of the said flow diverter ring (22) and the said materials pipe (11) defined by the lengthwise-extending ribs (221) forms a non-microbubble permeated polymer material channel (222), while that between the inner edge of the said flow diverter ring (22) and the said microbubble generating component (18) form a microbubble permeated polymer material channel (223) such that the non-microbubble permeated liquid polymer material (15) surrounds the microbubble permeated liquid polymer material (15').

7. Apparatus according to one of the preceding claims,
**characterized in that**
the said microbubble generating component (18) has selectable microscopic perforation dimensions as well a microscopic perforation vented metal head and microscopic perforation ceramic head options to achieve required microscopic bubble nucleation dimensions.

8. A method for controlling microscopic bubble nucleation in fluid polymer material production
comprising an injection or extraction forming mechanism, utilizing gas as a foaming agent,
wherein the gas is selected from the group consisting of carbon dioxide, nitrogen and other gaseous state sources capable of precipitating foam to provide for the microbubble nucleation of polymer material, the microbubble nucleation methods including the steps:
a) passing high pressure gas through a gas pipe (16) in a conveyance screw shaft (14) which is indirectly heated by utilizing a heater (12) provided at the outer periphery of a materials pipe (11);
b) supplying the heated high pressure gas to a microbubble generating component (18) at the front extremity of the said conveyance screw shaft (14), enabling the gas to be evenly output as microscopic bubbles from the inside irregularly arranged microscopic perforations;
c) blending the said microscopic bubbles at the said sections and the polymer material and transferring it by the said conveyance screw shaft (14) to form a uniform, microbubble permeated polymer material (15'), such that the injected or extracted microbubble permeated polymer material (15') consists of simultaneous microscopic bubble generation, blending, and transferring, providing for the rapid and even amalgamation of microscopic bubbles into the polymer material such that when the polymer material is shaped, it is a uniform, microbubble nucleated polymer material (15').

9. A method according to claim 8,
**characterized in that**
the said high pressure gas is sourced from a pressurization pump or a high pressure gas storage tank.

10. A method according to one of the preceding claims 8 to 9,
**characterized in that**
the control over the said high pressure gas conveyance sources permits control of the said microbubble generating component (18) such that microbubbles are continuously output or intermittently output, enabling the liquid polymer material and microscopic bubble generating section to be intermittently amalgamated or continuously amalgamated, thereby providing for an injection or an extraction forming method.

11. A method according to one of the preceding claim 8 to 10,
**characterized in that**
the said microbubble generating component (18) has microscopic perforations of such dimensions that it provides a microscopic bubble measuring less than 35 microns, enabling polymer material nucleation at less than 35 microns.

## Patentansprüche

1. Vorrichtung zur Durchführung eines Verfahrens zum Steuern der Nukleation mikroskopisch kleiner Blasen bei der Herstellung von fluiden polymeren Materialien, umfassend eine Materialröhre (11) einer Injektions- oder Extraktionseinrichtung (1(1')), die außen eine Erhitzungseinrichtung (12) aufweist, mit einer Förderschneckenwelle (14) innerhalb der Materialröhre (11), um das Schmelzen des polymeren Materials und seine Überführung mittels der Schneckenwelle (14) zu bewirken, die die folgenden Merkmale aufweist:
eine Gasleitung (16), die in dem Innenabschnitt der Förderschneckenwelle (14) angeordnet ist, und eine Lufteinlaßöffnung (17) der Gasleitung (16), die mit einer Druckpumpe oder einem Vorratsbehälter für Hochdruckgas verbunden ist; und
eine Komponente (18) zur Erzeugung von Mikroblasen, die aus unregelmäßig miteinander verknüpften mikroskopisch kleinen Perforationen besteht, welche von dem Inneren aus nach außen hin angeordnet sind, wobei sich die Gasleitung (16) in den Innenabschnitt der Mikroblasen erzeugenden Komponente (18) erstreckt,
**dadurch gekennzeichnet, daß** die Mikroblasen erzeugende Komponente (18) am äußersten Vorderende der Förderschneckenwelle (14) angeordnet ist.

2. Vorrichtung gemäß Anspruch 1,
**dadurch gekennzeichnet,**
**daß** die Mikroblasen erzeugende Komponente (18) ein durch mikroskopisch kleine Perforationen belüfteter Metallkopf ist.

3. Vorrichtung gemäß Anspruch 1,
**dadurch gekennzeichnet,**
**daß** die Mikroblasen erzeugende Komponente (18) ein durch mikroskopisch kleine Perforationen belüfteter Keramikkopf ist.

4. Vorrichtung gemäß einem der vorhergehenden Ansprüche,
**dadurch gekennzeichnet,**
**daß** die Mikroblasen erzeugende Komponente (18) als feste Metallkomponente hergestellt ist; daß ein Gasdurchlaß durch die Mitte horizontal angeordnet ist, der in Verbindung mit der Gasleitung (16) innerhalb der Förderschneckenwelle (14) steht, daß eine Anzahl von Belüftungsöffnungen (182') durch den Umfang der festen Metallkomponente hindurch ausgebildet ist, wobei die Belüftungsöffnungen (182') mit den Gasdurchlaß in Verbindung stehen, daß ein aus mikroskopisch kleinen Perforationen bestehender Belüftungsblock (183') in jeder Belüftungsöffnung (182') angeordnet ist und daß der Belüftungsblock (183') mit den mikroskopisch kleinen Perforationen auch unregelmäßige mikroskopisch kleine Perforationen aufweist.

5. Vorrichtung gemäß einem der vorhergehenden Ansprüche,
**dadurch gekennzeichnet,**
**daß** die Mikroblasen erzeugende Komponente (18) als hohle Metallkomponente hergestellt ist, so daß eine Luftkammer in dem Innenabschnitt ausgebildet ist, daß außerdem in der rückwärtigen Verlängerung der hohlen Metallkomponente eine Durchgangsöffnung angeordnet ist, die in Verbindung mit der Gasleitung (16) innerhalb der Förderschneckenwelle (14) steht, daß eine Anzahl von Belüftungsöffnungen (182') durch die Peripherie der hohlen Metallkomponente hindurch ausgebildet ist, ein Belüftungsblock (183') mit mikroskopisch kleinen Perforationen in jeder Belüftungsöffnunge (182') angeordnet ist und der Belüftungsblock (183') mit mikroskopisch kleinen Perforationen auch unregelmäßige mikroskopische kleine Perforationen aufweist.

6. Vorrichtung gemäß einem der vorhergehenen Anspruche,
**dadurch gekennzeichnet,**
**daß** die Mikroblasen erzeugende Komponente (18) auf einem Extraktor angeordnet ist und einen Strömungsumlenkring (22) aufweist, der hülsenartig auf ihr äußeres Ende aufgesetzt ist, und daß Rippen (221) in Längsrichtung auf dem Umfang des Strömungsumlenkringes (22) ausgebildet sind, so daß der Abstand zwischen dem äußeren Rand des Strömungsumlenkringes (22) und der Materialröhre (11), der durch die sich in Längsrichtung erstreckenden Rippen (221) definiert ist, einen Kanal (222) für ein nicht von Mikroblasen durchsetztes polymeres Material bildet, während der Abstand zwischen dem Innenrand des Strömungsumlenkringes (22) und der Mikroblasen erzeugenden Komponente (18) einen Kanal (223) für ein von Mikroblasen durchsetztes polymeres Material bildet, so daß das nicht von Mikroblasen durchsetzte flüssige polymere Material (15) das von Mikroblasen durchsetzte flüssige polymere Material (15') umgibt.

7. Vorrichtung gemäß einem der vorhergehenden Ansprüche,
**dadurch gekennzeichnet,**
**daß** die Mikroblasen erzeugende Komponente (18) auswählbare Abmessungen für die mikroskopische Perforation sowie wahlweise einen durch mikroskopische Perforation belüfteten Metallkopf und einen Keramikkopf mit mikroskopischer Perforation aufweist, um erforderliche Abmessungen für die Nukleation von mikroskopisch kleinen Blasen zu erzielen.

8. Verfahren zur Steuerung der Nukleation von mikroskopisch kleinen Blasen bei der Herstellung von flüssigem polymeren Material,
umfassend einen Injektions- oder Extraktions-Formmechanismus unter Verwendung eines Gases als Schaumbildungsmittel,
wobei das Gas aus der aus Kohlendioxid, Stickstoff und anderen Quellen im gasförmigen Zustand, die in der Lage sind, einen Schaum zu erzeugen, bestehenden Gruppe ausgewählt ist, um die Mikroblasennukleation von polymerem Material zu bewirken, wobei die Mikroblasennukleationsmethoden die folgende Stufen umfassen:
a) Durchleiten des Gases unter hohem Druck durch eine Gasleitung (16) in einer Welle (14) für eine Förderschnekke, die durch Verwendung einer Erhitzungseinrichtung (12), die an dem äußeren Umfang einer Materialröhre (11) vorgesehen ist, indirekt beheizt ist;
b) das erhitizte Gas unter hohem Druck einer Mikroblasen erzeugenden Komponente (18) am vordersten Ende der Förderschneckenwelle (14) zuführt, die das Gas gleichmäßig in Form von mikroskopisch kleinen Blasen aus innen unregelmäßig angeordneten mikroskopisch kleinen Perforationen austreten läßt; und
c) die mikroskopisch kleinen Blasen und das polymere Material vermischt und es durch die Förderschneckenwelle (14) fördert, um ein gleichmäßiges, von Mirkoblasen durchsetztes polymeres Material (15') zu erzeugen, so daß das eingespritzte oder extrahierte, von Mikroblasen durchsetze polymere Material (15') zugleich mit mikroskopisch kleinen Blasen versehen, vermischt und gefördert wird, wobei die rasche und gleichmäßige Einmischung von mikroskopisch kleinen Blasen in das polymere Material sichergestellt wird und, wenn das polymere Material ausgeformt ist, es ein gleichmäßiges, mit Mikroblasen nukleirtes polymeres Material (15') ist.

9. Verfahren gemäß dem Anspruch 8,
**dadurch gekennzeichnet,**
**daß** das unter hohem Druck stehende Gas aus einer Druckpumpe oder aus einem Vorratsbehälter für Hochdruckgas stammt.

10. Verfahren gemäß einem der Ansprüche 8 oder 9,
**dadurch gekennzeichnet,**
**daß** die Steuerung der Hochdruckgaszuleitungsquellen die Steuerung der Mikroblasen erzeugenden Komponente (18) derart ermöglicht, daß Mikroblasen konitinuierlich oder absatzweise ausgebracht werden, wodurch das flüssige polymere Material und die mikroskopischen kleinen Blasen absatzweise oder kontinuierlich miteinander vermischt werden und **dadurch** ein Injektions- oder ein Extraktionsformverfahren durchgeführt werden kann.

11. Verfahren gemäß einem der Ansprüche 8 bis 10,
**dadurch gekennzeichnet,**
**daß** die Mikroblasen erzeugende Komponente (18) mikroskopisch kleine Perforationen von derartigen Abmessungen aufweist, daß sie mikroskopische Blasen von weniger als 35 µm erzeugt und damit eine Nukleation von polymerem Material bei weniger als 35 µm ermöglicht.

## Revendications

1. Appareil pour conduire un procédé de contrôle de nucléation de bulles microscopiques dans la production d'une matière polymère fluide, comprenant une conduite de matière (11) d'un injecteur ou d'un extracteur (1(1')) ayant un dispositif de chauffage (12) à l'extérieur, avec un arbre hélicoïdal de transport (14) à l'intérieur dudit conduit de matière (11) pour faire fondre la matière polymère et la transférer par l'arbre hélicoïdal de transport (14), dont les particularités sont :
- une conduite de gaz (16) disposée dans la section intérieure dudit arbre hélicoïdal de transport (14) et une ouverture d'admission d'air (17) de la conduite de gaz (16) reliée à une pompe de pressurisation ou un réservoir de stockage de gaz haute pression ; et
- un composant (18) de génération de microbulles qui consiste en perforations microscopiques interconnectées de façon irrégulière disposées vers l'extérieur à partir de l'intérieur, ledit conduit de gaz (16) s'étendant dans la section intérieure dudit composant (18) de génération de microbulles, **caractérisé par le fait que** le composant (18) de génération de microbulles est disposé à l'extrémité avant de l'arbre hélicoïdal de transport (14).

2. Appareil selon la revendication 1,
**caractérisé par le fait que**
ledit composant (18) de génération de microbulles est une tête métallique ventilée à perforations microscopiques.

3. Appareil selon la revendication 1,
**caractérisé par le fait que**
ledit composant (18) de génération de microbulles est une tête céramique ventilée à perforations microscopiques.

4. Appareil selon l'une quelconque des revendications précédentes,
**caractérisé par le fait que**
ledit composant (18) de génération de microbulles est fabriqué sous la forme d'un composant métallique plein ; un passage de gaz est disposé horizontalement à travers le centre qui est en continuité avec ladite conduite de gaz (16) à l'intérieur dudit arbre hélicoïdal de transport (14) et plusieurs trous d'évent (182') sont formés à travers la périphérie dudit composant métallique plein, lesdits trous d'évent (182') étant en continuité avec ledit passage de gaz et un bloc d'évent à perforations microscopiques (183') est situé dans chaque trou d'évent précité (182'), et ledit bloc d'évent à perforations microscopiques (183') a également des perforations microscopiques irrégulières.

5. Appareil selon l'une quelconque des revendications précédentes,
**caractérisé par le fait que**
ledit composant (18) de génération de microbulles est fabriqué sous la forme d'un composant métallique creux de telle sorte qu'une chambre à air est formée dans la section intérieure et, en outre, un trou traversant est disposé dans l'étendue arrière dudit composant métallique creux qui est en continuité avec ladite conduite de gaz (16) à l'intérieur dudit arbre hélicoïdal de transport (14) et plusieurs trous d'évent (182') sont formés à travers la périphérie dudit composant métallique creux, un bloc d'évent à perforations microscopiques (183') est situé dans chaque trou d'évent précité (182') et ledit bloc d'évent à perforations microscopiques (183') a également des perforations microscopiques irrégulières.

6. Appareil selon l'une quelconque des revendications précédentes,
**caractérisé par le fait que**
ledit composant (18) de génération de microbulles est disposé sur un extracteur et a une bague (22) de déviation d'écoulement chemisé sur sa bordure externe et des nervures (221) sont formées selon la longueur le long de la périphérie de ladite bague (22) de déviation d'écoulement de telle sorte que la hauteur entre les bordures externes de ladite bague (22) de déviation d'écoulement et ledit conduit de matière (18) défini par les nervures (221) s'étendant dans le sens de la longueur forme un canal (222) de matière polymère non traversée par des microbulles, alors que celui entre la bordure interne de ladite bague (22) de déviation d'écoulement et le composant (18) de génération de microbulles forme un canal de matière polymère (223) traversée par des microbulles, de telle sorte que la matière polymère liquide (15) non traversée par les microbulles entoure la matière polymère liquide (15') traversée par des microbulles.

7. Appareil selon l'une quelconque des revendications précédentes,
**caractérisé par le fait que**
ledit composant (18) de génération de microbulles a des dimensions de perforation microscopique sélectionnables ainsi qu'une tête métallique ventilée à perforations microscopiques et des options de tête céramique à perforations microscopiques pour parvenir à des dimensions de nucléation à bulles microscopiques requises.

8. Procédé de contrôle de la nucléation de bulles microscopiques dans la production de matière polymère fluide
comprenant un mécanisme de formage par injection ou extraction, utilisant un gaz comme agent moussant,
dans lequel le gaz est choisi dans le groupe constitué par le dioxyde de carbone, l'azote et d'autres sources à l'état gazeux capables de faire précipiter une mousse pour assurer la nucléation de microbulles de matière polymère, les procédés de nucléation des microbulles comprenant les étapes consistant à :
a) faire passer du gaz haute pression à travers un conduit de gaz (16) dans un arbre hélicoïdal de transport (14) qui est chauffé indirectement à l'aide d'un dispositif de chauffage (12) disposé à la périphérie externe d'un conduit de matières (11) ;
b) adresser le gaz sous haute pression chauffé à un composant (18) de génération de microbulles à l'extrémité avant dudit arbre hélicoïdal de transport (14), permettant au gaz d'être émis de façon régulière sous la forme de bulles microscopiques à partir des perforations microscopiques disposées irrégulièrement à l'intérieur ;
c) mélanger lesdites bulles microscopiques auxdites sections et la matière polymère et la transférer par l'arbre hélicoïdal de transport (14) pour former une matière polymère (15') traversée par des microbulles, uniforme, de telle sorte que la matière polymère (15') traversée par des microbulles injectée ou extraite consiste en génération, mélange et transfert simultanés de bulles microscopiques, assurant l'amalgation rapide et régulière de bulles microscopiques dans la matière polymère de telle sorte que, lorsque la matière polymère est façonnée, elle est une matière polymère nucléée à microbulles, uniforme (15').

9. Procédé selon la revendication 8,
**caractérisé par le fait que**
ledit gaz haute pression est issu d'une pompe de pressurisation ou d'un réservoir de stockage de gaz haute pression.

10. Procédé selon l'une quelconque des revendications précédentes 8 et 9,
**caractérisé par le fait que**
le contrôle sur les sources de transport de gaz haute pression précitées permet un contrôle dudit composant (18) de génération de microbulles de telle sorte que les microbulles sont émises de façon continue ou émises par intermittence, permettant à la matière polymère liquide et à la section de génération de bulles microscopiques d'être amalgamées par intermittence ou amalgamées en continue, assurant de cette façon un procédé de formage par injection ou extraction.

11. Procédé selon l'une des revendications précédentes 8 à 10,
**caractérisé par le fait que**
ledit composant (18) de génération de microbulles a des perforations microscopiques de dimensions telles qu'il fournit une bulle microscopique mesurant moins de 35 microns, permettant une nucléation de matière polymère à moins de 35 microns.
